# EUROPEAN PATENT APPLICATION

(11) **EP 4 131 658 A1**
(43) Date of publication of application: **08.02.2023**
(21) Application number: 21781352.6
(22) Date of filing: 01.04.2021
(51) Int. Cl.: H01R 4/20, H01R 4/58

(54) **NOVEL END ALUMINUM PART**

(30) Priority: 01.04.2020 CN 202020456581 U
(71) Applicant: Jilin Zhong Ying High Technology Co., Ltd., Jilin 130000 (CN)
(72) Inventor: WANG, Chao, Changchun, Jilin 130000 (CN); MIAO, Yun, Changchun, Jilin 130000 (CN)
(74) Representative: Boult Wade Tennant LLP
(86) International application number: PCT/CN2021/084907
(87) International publication number: WO 2021/197417

(57) **Abstract**

A novel end aluminum part including a first cylinder (1) for accommodating a conductor (7) of an aluminum wire (5), a second cylinder (2) for abutting an insulation layer (6) of the aluminum wire (5), and a third cylinder (3) for accommodating the aluminum wire (5). The first cylinder (1) is connected to the top of the second cylinder (2), and the third cylinder (3) is connected to the bottom of the second cylinder (2). An inner diameter of the bottom of the second cylinder (2) is larger than an inner diameter of the top of the second cylinder (2), an inner diameter of the first cylinder (1) is the same as the inner diameter of the top of the second cylinder (2), and an inner diameter of the third cylinder (3) is the same as the inner diameter of the bottom of the second cylinder (2). The second cylinder (2) will not only reduce the stress between the insulation layer and the end aluminum part, so as to reduce the possibility of cracking or breakage of the end aluminum part due to excessive concentration of stress during crimping with the aluminum wire, but also prevent the insulation layer from being pressed into the conductor.

## Description

### CROSS-REFERENCE TO RELATED APPLICATION

The present application claims priority to Chinese Patent Application No. 202020456581.0, filed on April 01, 2020, and entitled "NOVEL END ALUMINIUM PART".

### TECHNICAL FIELD

The present disclosure relates to the technical field of aluminum wire connection, in particular to a novel end aluminum part.

### BACKGROUND

At present, when making a copper-aluminum joint by friction welding, firstly a conductor of an aluminum wire needs to be pressed into a hard structure by using an end aluminum part, and then the hard structure formed by the pressing is connected to a copper terminal by friction welding.

A Chinese Patent Application No. 201310256851.8 discloses a copper-aluminum joint and a manufacturing method thereof. The copper-aluminum joint includes an aluminum wire, an aluminum tube, a copper wiring terminal, and a welding layer. The aluminum wire includes a wire harness and an insulation layer wrapping the wire harness. The aluminum wire is sleeved by the aluminum tube, which has one end located on the wire harness removed of insulation layer at the end portion of the aluminum wire, and the other end located on an adjacent insulation layer. The inner wall of the aluminum tube is stepped to match with an end surface of the insulation layer.

However, since the inner wall of the aluminum tube is stepped, the aluminum tube has the following defects during use.
(1) In the process of crimping the aluminum tube to the aluminum wire, the insulation layer is stretched due to extrusion deformation. However, since the inner stepped surface of the aluminum tube is matched with the end surface of the insulation layer, the insulation layer cannot extend toward the inner stepped surface of the aluminum tube, which will cause part of the insulation layer to be pressed into the wire harness. As a result, the heating generated by the aluminum wire increases, which may even lead to a burning accident of the insulation layer.
(2) The aluminum tube has a step at the stepped root portion. In the process of crimping the aluminum tube to the aluminum wire, a stress concentration at the stepped root portion will easily lead to crack or fracture of the aluminum tube, which will cause damage to the aluminum tube, thereby causing a function failure of the pressed aluminum wire, and may even cause a short circuit of the copper-aluminum joint, resulting in a burning accident.
(3) The portion of the aluminum tube that is crimped to the insulation layer is a relatively thin stepped portion. When the aluminum wire is under continuous stress after installation, the thin stepped portion of the aluminum tube may be damaged and cannot bind the insulation layer of the aluminum wire, such that the insulation layer of the aluminum wire is prone to fall off. As a result, the exposed conductor portion of the aluminum wire is corroded, thereby reducing the service life of the copper-aluminum joint.
(4) Since the inner stepped surface of the aluminum tube is matched with the end surface of the insulation layer, the length of the insulation layer stripped from the aluminum wire has an influence on the length of the wire harness in the aluminum tube. However, the tolerance of stripping the insulation layer from the aluminum wire is relatively large, which can reach ±1 mm. When the length of the wire harness is greater than that of the aluminum tube, the front end of the aluminum wire extends out of the aluminum tube crimped with the aluminum wire, which may cause waste of the aluminum wire. When the length of the wire harness is less than that of the aluminum tube, a pressure empty phenomenon will occur when the aluminum tube and the aluminum wire are crimped, then during the subsequent welding, the end face of the aluminum wire inside the aluminum tube cannot be welded with the copper terminal, thereby causing welding failure, increasing contact resistance, and finally causing the copper-aluminum joint to generate heat and even causing a burning accident.

Therefore, in the technical field of aluminum wire connection, there is an urgent need for an end aluminum part to solve the above problems, so as to improve the mechanical and electrical properties of the joint formed by welding the end aluminum part and the copper terminal, and extend the service life of the copper aluminum terminal with the end aluminum part.

### SUMMARY

In order to overcome the defects of the prior art, the disclosure provides a novel end aluminum part, which can not only reduce the possibility that the insulation layer of the aluminum wire is pressed into the wire harness when the end aluminum part and the aluminum wire are crimped, but also reduce the stress between the end aluminum part and the insulation layer of the aluminum wire, thereby prolonging the service life of the end aluminum part.

In order to solve the above technical problems, the technical solution adopted by the present disclosure is specifically as follows.

A novel end aluminum part including a first cylinder for accommodating a conductor of an aluminum wire, a second cylinder for abutting an insulation layer of the aluminum wire, and a third cylinder for accommodating the aluminum wire, wherein the first cylinder is connected to the top of the second cylinder, and the third cylinder is connected to the bottom of the second cylinder; the first cylinder and the third cylinder are both hollow column-shaped, and the second cylinder is hollow frustum-shaped; an inner diameter of the bottom of the second cylinder is larger than an inner diameter of the top of the second cylinder, an inner diameter of the first cylinder is the same as the inner diameter of the top of the second cylinder, and an inner diameter of the third cylinder is the same as the inner diameter of the bottom of the second cylinder.

Compared with the prior art, the present disclosure has advantageous effects as follows.
1. Since the second cylinder is hollow frustum-shaped, and the inner wall of the second cylinder abuts against the insulation layer of the aluminum wire, when the novel end aluminum part is crimped with the aluminum wire, in one aspect, the second cylinder will reduce the stress between the insulation layer and the end aluminum part, so as to reduce the possibility of cracking or breakage of the novel end aluminum part due to excessive concentration of stress during crimping with the aluminum wire; and in another aspect, the second cylinder with a trapezoidal longitudinal section will accommodate the insulation layer deformed and stretched during the crimping process to reduce the possibility of the insulation layer being pressed into the conductor.
2. The top of the first cylinder is provided with a baffle, which can effectively confine the conductor within the first cylinder to prevent the end face of the conductor from exceeding the end face of the first cylinder after the novel end aluminum part is crimped with the aluminum wire, thereby ensuring a reliable welding between the end face of the conductor and the copper terminal. Moreover, the baffle can confine the insulation layer within the second cylinder so the length of the second cylinder can offset the tolerance of stripping the insulation layer.

The above description is merely an overview of the technical solution of the present disclosure, and may be implemented according to the contents of the specification in order to better understand the technical means of the present disclosure, and in order to make the above and other objects, features, and advantages of the present disclosure be more obvious and easier to understand, hereinafter detailed description is given by combining exemplary embodiments in conjunction with the accompanying drawings.

### BRIEF DESCRIPTION OF THE DRAWINGS

FIG. 1 is a structural schematic of a novel end aluminum part according to the present disclosure;
FIG. 2 is a structural schematic of the novel end aluminum part according to the present disclosure before being crimped with an aluminum wire;
FIG. 3 is a structural schematic of the novel end aluminum part according to the present disclosure after being crimped with an aluminum wire;

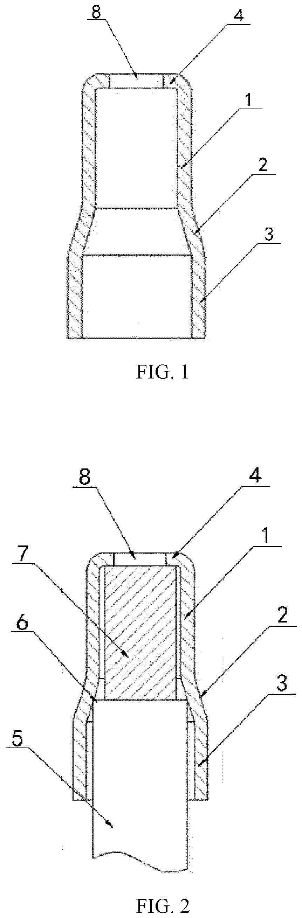

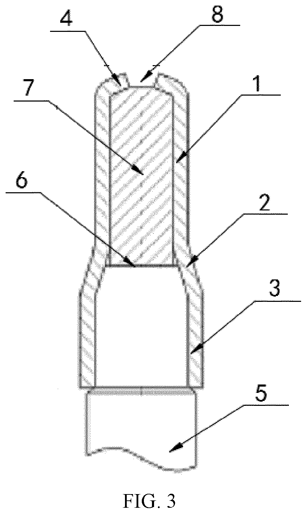

The reference numerals in Figs. 1 to 3:

1. first cylinder; 2. second cylinder; 3. third cylinder; 4. baffle; 5. aluminum wire; 6. insulation layer; 7. conductor; 8. through hole.

### DETAILED DESCRIPTION

In order to further illustrate the technical means and effects of the present disclosure for achieving the intended object of the present disclosure, specific embodiments, structures, features and functions thereof according to the present disclosure will now be described in detail in conjunction with the drawings and exemplary embodiments as follows.

As shown in Figs. 1 to 3, the present disclosure provides a novel end aluminum part including a first cylinder 1 for accommodating a conductor 7 of an aluminum wire 5, a second cylinder 2 for abutting an insulation layer 6 of the aluminum wire 5, and a third cylinder 3 for accommodating the aluminum wire 5. The first cylinder 1 is connected to the top of the second cylinder 2. The third cylinder 3 is connected to the bottom of the second cylinder 2. The first cylinder 1 and the third cylinder 3 are both hollow column-shaped, and the second cylinder 2 is hollow frustum-shaped. An inner diameter of the bottom of the second cylinder 2 is larger than an inner diameter of the top of the second cylinder 2. An inner diameter of the first cylinder 1 is the same as the inner diameter of the top of the second cylinder 2. An inner diameter of the third cylinder 3 is the same as the inner diameter of the bottom of the second cylinder 2.

In the present disclosure, it should be noted that the aluminum wire 5 includes a conductor 7 and an insulation layer 6 wrapped on the outer surface of the conductor 7.

Since the second cylinder 2 is hollow frustum-shaped, and the inner wall of the second cylinder 2 abuts against the insulation layer 6 of the aluminum wire 5, when the novel end aluminum part is crimped with the aluminum wire 5, in one aspect, the inclined inner wall of the second cylinder 2 will reduce the stress between the insulation layer 6 and the end aluminum part, so as to reduce the possibility of cracking or breakage of the novel end aluminum part due to excessive concentration of stress during the process of crimping the novel end aluminum part with the aluminum wire 5; and in another aspect, the second cylinder 2 with a trapezoidal longitudinal section will accommodate the insulation layer 6 deformed and stretched during the crimping process to reduce the possibility of the insulation layer 6 being pressed into the conductor 7, thereby avoiding a burning accident that may be caused by overheat of the aluminum wire 5 due to the insulation layer 6 being press into the conductor 7.

Specifically, the shape of the first cylinder 1 and the third cylinder 3 are both hollow cylinders, and the shape of the second cylinder 2 is a hollow truncated cone.

The top of the first cylinder 1 is provided with a baffle 4 for effectively controlling the length of the conductor 7 in the first cylinder 1, so as to avoid that the end face of the conductor 7 is lower than the first cylinder 1 after the novel end aluminum part is crimped with the aluminum wire 5, thereby ensuring a reliable welding between the end face of the conductor 7 and the copper terminal. Moreover, the baffle 4 can confine the insulation layer 6 within the second cylinder 2, so the length of the second cylinder 2 can offset the tolerance of stripping the insulation layer 6.

In order to be able to observe the position of the aluminum wire 5 in the novel end aluminum part, as a further exemplary solution, the center position of the baffle 4 is provided with a through hole 8. Therefore, the position of the conductor 7 of the aluminum wire 5 and the insulation layer 6 in the novel end aluminum part can be observed through the through hole 8. In addition, the stripped length of the insulation layer 6 at the front end of the aluminum wire 5 can also be determined according to actual conditions.

In order to avoid the conductor 7 from passing through the through hole 8, the inner diameter of the through hole 8 is smaller than that of the first cylinder 1, so that the front end of the conductor 7 can be limited by the edge of the through hole 8, thereby confining the conductor 7 within the first cylinder 1.

The inner diameter of the first cylinder 1 is 1 to 3 times the diameter of the circumscribed circle of the conductor 7, which can not only facilitate the conductor 7 to be more conveniently inserted into the first cylinder 1, but also ensure a better crimping of the novel end aluminum part with the conductor 7 of the aluminum wire 5.

In order to understand the influence of the ratio of the inner diameter of the first cylinder 1 to the diameter of the circumscribed circle of the conductor 7 on the performance of the novel end aluminum part, the inventor has conducted an Experiment 1 including: making multiple different novel end aluminum parts that differ only in the ratio of the inner diameter of the first cylinder 1 to the diameter of the circumscribed circle of the conductor 7; and testing the mechanical and electrical properties of the above-mentioned different novel end aluminum parts. The specific test results are shown in Table 1.

**Table 1 Effect of the ratio of the inner diameter of the first cylinder to the diameter of the circumscribed circle of the conductor on the performance of the novel end aluminum part**

| No. | Ratio of the inner diameter of the first cylinder to the diameter of the circumscribed circle of the conductor | | | | | | | | | | |
|---|---|---|---|---|---|---|---|---|---|---|---|
| | 0.6 | 0.8 | 1 | 1.2 | 1.5 | 1.7 | 2 | 2.5 | 3 | 3.1 | 3.5 |
| 1 | Pullout force (N) of the novel end aluminum part | | | | | | | | | | |
| | not insertable | not insertable | 2045 | 2184 | 2264 | 2378 | 2237 | 2168 | 2094 | 1035 with a crack | 986 with a crack |
| 2 | Voltage drop (mV) of the novel end aluminum part | | | | | | | | | | |
| | / | / | 0.46 | 0.43 | 0.39 | 0.34 | 0.38 | 0.44 | 0.47 | 0.52 | 0.59 |

As can be seen from Table 1, in this embodiment, the inventor tests the pullout force and the voltage drop of the novel end aluminum part in which the ratio of the inner diameter of the first cylinder 1 to the diameter of the circumscribed circle of the conductor 7 is in the range of 0.6 to 3.5. The test results are as follows.

When the ratio is smaller than 1, the conductor 7 cannot be inserted into inside of the first cylinder 1.

When the ratio is greater than 3, the first cylinder 1 needs to be compressed by a large proportion to be crimped with the conductor 7. Moreover, the pullout force of the novel end aluminum part is significantly reduced, which does not meet the requirement that the pullout force is more than 2000 N. In addition, the voltage drop increases significantly and does not meet the requirement that the voltage drop is lower than or equal to 0.5 mV. Furthermore, cracks have appeared in the novel end aluminum part, which greatly reduces the service life of the novel end aluminum part.

In order to ensure that the aluminum wire 5 can be inserted into the third cylinder 3, the inner diameter of the third cylinder 3 is 1 to 3 times the diameter of the circumscribed circle of the insulation layer 6, which is also possible to ensure a better crimping of the novel end aluminum part to the aluminum wire 5.

In order to understand the influence of the ratio of the inner diameter of the third cylinder 3 to the diameter of the circumscribed circle of the insulation layer 6 on the performance of the novel end aluminum part, the inventor has conducted an Experiment 2 including: making multiple different novel end aluminum parts that differ only in the ratio of the inner diameter of the third cylinder 3 to the diameter of the circumscribed circle of the insulation layer 6; and testing the mechanical and electrical properties of the above-mentioned different novel end aluminum parts. The specific test results are shown in Table 2.

**Table 2 Effect of the ratio of the inner diameter of the third cylinder to the diameter of the circumscribed circle of the insulation layer on the performance of the novel end aluminum part**

| No. | Ratio of the inner diameter of the third cylinder to the diameter of the circumscribed circle of the insulation layer | | | | | | | | | | |
|---|---|---|---|---|---|---|---|---|---|---|---|
| | 0.6 | 0.8 | 1 | 1.2 | 1.5 | 1.7 | 2 | 2.5 | 3 | 3.2 | 3.5 |
| 1 | Pullout force (N) of the novel end aluminum part | | | | | | | | | | |
| | not insertable | not insertable | 2056 | 2148 | 2272 | 2336 | 2289 | 2164 | 2018 | 1050 with a crack | 1011 with a crack |
| 2 | Voltage drop (mV) of the novel end aluminum part | | | | | | | | | | |
| | - | - | 0.47 | 0.42 | 0.36 | 0.31 | 0.37 | 0.45 | 0.49 | 0.55 | 0.60 |

As can be seen from Table 2, in this embodiment, the inventor tests the pullout force and the voltage drop of the novel end aluminum part in which the ratio of the inner diameter of the third cylinder 3 to the diameter of the circumscribed circle of the insulation layer 6 is in the range of 0.6 to 3.5. The test results are as follows.

When the ratio is smaller than 1, the aluminum wire 5 cannot be inserted into the through hole of the third cylinder 3.

When the ratio is greater than 3, the third cylinder 3 needs to be compressed by a large proportion to be crimped with the aluminum wire 5. Moreover, the pullout force of the novel end aluminum part is significantly reduced, which does not meet the requirement that the pullout force is more than 2000 N. In addition, the voltage drop increases significantly and does not meet the requirement that the voltage drop is lower than or equal to 0.5 mV. Furthermore, cracks have appeared in the novel end aluminum part, which greatly reduces the service life of the novel end aluminum part.

The projection length of the second cylinder 2 in the axial direction thereof is 0.01 to 1.7 times the sum of the lengths of the first cylinder 1 and the third cylinder 3.

In order to understand influence of the ratio of the projection length of the second cylinder 2 in the axial direction to the sum of the lengths of the first cylinder 1 and the third cylinder 3 on the performance of the novel end aluminum part, the inventor has conducted an Experiment 3, in which the lengths of the first cylinder 1 and the third cylinder 3 are fixed, the length of the second cylinder 2 is different, and the corresponding multiplying ratios are calculated. The specific test results are shown in Table 3.

**Table 3 Ratio of the projection length of the second cylinder in the axial direction to the sum of the lengths of the first cylinder 1 and the third cylinder 3**

| No. | Ratio of the projection length of the second cylinder in the axial direction to the sum of the lengths of the first cylinder 1 and the third cylinder 3 | | | | | | | | | | |
|---|---|---|---|---|---|---|---|---|---|---|---|
| | 0 | 0.01 | 0.05 | 0.1 | 0.5 | 0.8 | 1.0 | 1.5 | 1.7 | 2.0 | 2.2 |
| | Pressed-in state | | | | | | | | | | |
| | Pressed-in insulation | Normal | Normal | Normal | Normal | Normal | Normal | a gap (5% 10%) | a gap (5% ∼15%) | a gap (30% or more) | a gap (30% or more) |

Since the second cylinder 2 is used to reduce the crimping stress of the novel end aluminum part, and to accommodate the insulation layer 6 deformed and extended during the crimping to reduce the possibility of the insulation layer 6 being pressed into the conductor, the length of the second cylinder 2 needs to be greater than the extended length of the insulation layer 6. If the projection length of the second cylinder 2 in the axial direction is smaller than 0.01 times the sum of the lengths of the first cylinder 1 and the third cylinder 3, the insulation layer 6 will not be able to extend toward the inner wall of the second cylinder 2 during the crimping of the novel end aluminum part with the aluminum wire 5, which will cause part of the insulation layer 6 to be pressed into the aluminum wire 5. As a result, the heating generated by the aluminum wire 5 increases, and even the insulation layer 6 is partially broken down, resulting in a burning accident. If the projection length of the second cylinder 2 in the axial direction is greater than 1.7 times the sum of the lengths of the first cylinder 1 and the third cylinder 3, the proportion of the second cylinder 2 in the novel end aluminum part is too large, resulting in large gaps and wasting resources.

In the description of the present disclosure, it should be noted that the terms "first," "second," "third" and the like are used only to describe the names of the components, and cannot be understood as indicating or implying the relative importance of the components.

The above embodiments are only exemplary embodiments of the present disclosure, and the scope of protection of the present disclosure is not limited thereto. Any non-essential changes and substitutions made by those skilled in the art on the basis of the present disclosure are within the scope of the claimed disclosure.

## Claims

1. A novel end aluminum part comprising a first cylinder for accommodating a conductor of an aluminum wire, a second cylinder for abutting an insulation layer of the aluminum wire, and a third cylinder for accommodating the aluminum wire, wherein the first cylinder is connected to the top of the second cylinder, and the third cylinder is connected to the bottom of the second cylinder; the first cylinder and the third cylinder are both hollow column-shaped, and the second cylinder is hollow frustum-shaped; an inner diameter of the bottom of the second cylinder is larger than an inner diameter of the top of the second cylinder, an inner diameter of the first cylinder is the same as the inner diameter of the top of the second cylinder, and an inner diameter of the third cylinder is the same as the inner diameter of the bottom of the second cylinder.

2. The novel end aluminum part according to claim 1, wherein the top of the first cylinder is provided with a baffle.

3. The novel end aluminum part according to claim 2, wherein a center position of the baffle is provided with a through hole.

4. The novel end aluminum part according to claim 3, wherein an inner diameter of the through hole is smaller than the inner diameter of the first cylinder.

5. The novel end aluminum part according to claim 1, wherein the inner diameter of the first cylinder is 1 to 3 times the diameter of the circumscribed circle of the conductor.

6. The novel end aluminum part according to claim 1, wherein the inner diameter of the third cylinder is 1 to 3 times the diameter of the circumscribed circle of the insulation layer.

7. The novel end aluminum part according to claim 1, wherein a projection length of the second cylinder in an axial direction thereof is 0.01 to 1.7 times the sum of lengths of the first cylinder and the third cylinder.
